# DEMANDE DE BREVET EUROPEEN

(11) **EP 1 110 842 A1**
(43) Date de publication de la demande: **27.06.2001**
(21) Numéro de dépôt: 00403381.7
(22) Date de dépôt: 01.12.2000
(51) Int. Cl.: B62D 1/10, B60R 21/20

(54) **Coquille de support pour coussin central fixe et ensemble de colonne de direction correspondant**

(30) Priorité: 16.12.1999 FR 9915909
(71) Demandeur: Faurecia Industries, 92100 Boulogne-Billancourt (FR)
(72) Inventeur: Barneoud, Jean-Marc, 25350 Mandeure (FR); Morel, Jean-Charles, 25200 Montbeliard (FR)
(74) Mandataire: Domenego, Bertrand

(57) **Abrégé**

Cette coquille comprend une coupelle (66) de réception d'accessoires et des moyens (70, 71) de fixation de la coquille (66) à un bloc (16) d'un ensemble de colonne de direction qui reste fixe lors de la rotation d'un volant de direction (12).

Les moyens de fixation comprennent des moyens (110, 112) d'encliquetage de la coquille (66) dans le bloc fixe (16) par déplacement de la coquille (66) selon une direction d'encliquetage (X-X).

## Description

La présente invention concerne une coquille de support pour coussin central fixe d'un ensemble de colonne de direction pour véhicule automobile, la coquille étant du type comprenant une coupelle de réception d'accessoires et des moyens de fixation de la coquille à un bloc de l'ensemble de colonne de direction qui reste fixe lors de la rotation d'un volant de direction.

Une coquille du type précité est connue par exemple du document EP-825 089. Dans ce document, la coquille de support est fixée au bloc fixe par l'intermédiaire de vis.

Un but de l'invention est de former une coquille du type précité qui soit de montage plus simple et plus économique.

A cet effet, l'invention a pour objet une coquille du type précité, caractérisée en ce que les moyens de fixation comprennent des moyens d'encliquetage de la coquille dans le bloc fixe par déplacement de la coquille selon une direction d'encliquetage.

Selon des modes particuliers de réalisation, la coquille peut comprendre l'une ou plusieurs des caractéristiques suivantes, prises isolément ou selon toutes les combinaisons techniquement possibles :
- la direction d'encliquetage est parallèle à un axe central de la coquille destiné à être lui-même parallèle avec l'axe de rotation du volant de direction,
- la coquille comprend au moins un organe mâle d'enfichage dans le bloc fixe pour centrer et positionner angulairement la coquille par rapport à ce dernier, l'organe mâle s'étendant longitudinalement parallèlement à l'axe central de la coquille,
- l'organe mâle est terminé par une pointe de positionnement,
- les moyens d'encliquetage comprennent des reliefs d'encliquetage portés par l'organe mâle,
- l'organe mâle délimite intérieurement un passage longitudinal de réception de moyens de raccordement électrique, lequel passage débouche dans la coupelle,
- la coquille comprend au moins deux organes mâles d'enfichage dans le bloc fixe pour centrer et positionner angulairement la coquille par rapport à ce dernier, ces organes mâles s'étendant longitudinalement parallèlement à l'axe central de la coquille,
- les deux organes mâles d'enfichage sont excentrés par rapport à l'axe central de la coquille, et
- la coquille est formée d'une seule pièce.

L'invention a en outre pour objet un ensemble de colonne de direction comprenant un arbre de direction, un volant de direction pour entraîner l'arbre de direction en rotation, un bloc fixe lors de la rotation du volant de direction, et un coussin central fixe comprenant lui-même une coquille de support montée sur le bloc fixe, caractérisé en ce que la coquille de support est une coquille telle que définie ci-dessus dont les moyens d'encliquetage coopèrent avec des moyens complémentaires d'encliquetage du bloc fixe pour fixer la coquille sur le bloc fixe.

L'invention sera mieux comprise à la lecture de la description qui va suivre, donnée uniquement à titre d'exemple, et faite en se référant aux dessins annexés, sur lesquels :
- la figure 1 est une vue schématique, partielle et en coupe longitudinale d'un ensemble de colonne de direction selon l'invention,
- les figures 2 et 3 sont des vues schématiques en perspective, prises suivant des directions différentes, de la coquille de support du coussin central fixe de l'ensemble de la figure 1,
- la figure 4 est une vue schématique latérale illustrant le verrouillage de cette coquille dans l'ensemble de la figure 1,
- la figure 5 est une vue analogue à la figure 4 illustrant le montage de la coquille,
- la figure 6 est une vue analogue à la figure 1, agrandie et illustrant une variante de l'ensemble de la figure 1, et
- la figure 7 est une vue analogue à la figure 2 illustrant une variante de la coquille de support du coussin central fixe.

Dans tout ce qui suit les termes " avant " et " arrière " s'entendent par rapport à la position d'un conducteur.

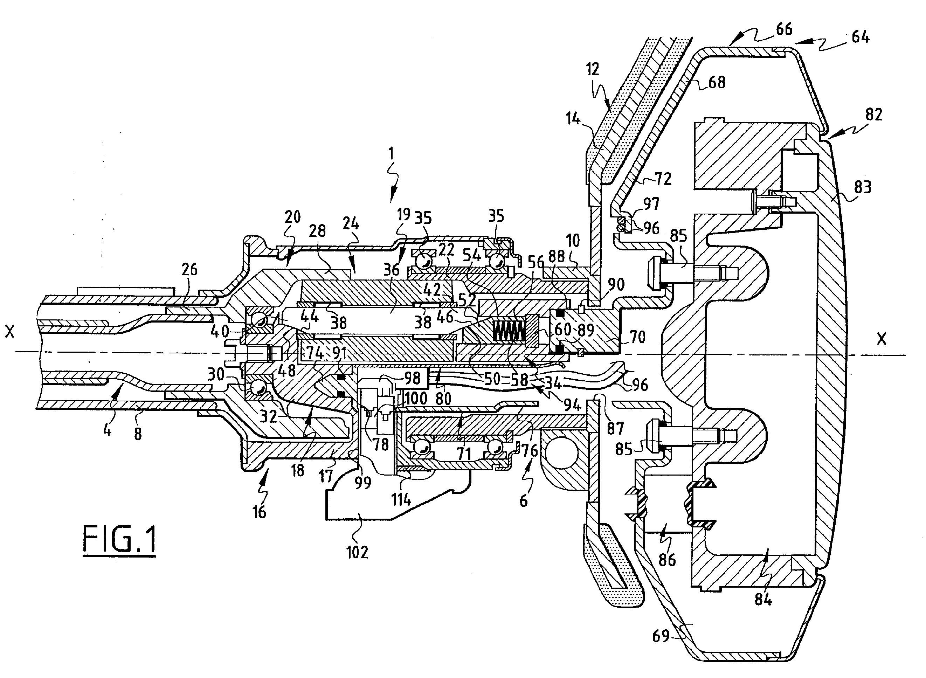

La figure 1 illustre un ensemble de colonne de direction 1 d'un véhicule automobile qui comprend un arbre de direction d'axe longitudinal X-X. L'arbre de direction comprend lui-même un tronçon avant 4 (à gauche sur la figure 1 ) et un tronçon arrière 6.

Le tronçon avant 4, qui peut être par exemple réalisé en plusieurs parties comme représenté sur la figure 1, est reçu de manière connue à rotation dans un corps de colonne de direction 8 porté par la structure du véhicule automobile.

Le tronçon arrière 6 de l'arbre de direction est relié de manière fixe en rotation au moyeu 10 d'un volant de direction 12 de manière classique, par exemple par blocage radial au moyen d'une vis conique. Ce volant 12 comprend une jante annulaire (non représentée) reliée rigidement au moyeu 10 par plusieurs branches 14 réparties angulairement autour de celui-ci.

L'ensemble de colonne de direction 1 comprend en outre un bloc ou corps fixe 16 disposé entre les tronçons avant 4 et arrière 6 de l'arbre de direction. Le corps fixe 16 comprend une enveloppe ou jupe extérieure 17 de forme générale cylindrique d'axe X-X, et un noyau central 18 relié rigidement à la jupe 17. Ce corps 16 est relié rigidement au reste de la structure du véhicule par sa jupe 17 de manière à rester fixe lorsque l'arbre de direction tourne sous l'action du volant de direction 12.

L'ensemble 1 comprend en outre un mécanisme à engrenages 19 pour transmettre un mouvement de rotation du tronçon arrière 6 de l'arbre de direction vers le tronçon avant 4. Ce mécanisme 19 comprend un organe denté avant 20 sous forme d'une cloche, un organe denté arrière 22 et un organe denté intermédiaire 24 sous forme d'un pignon allongé.

L'extrémité avant 26 de la cloche 20 est solidaire en rotation de l'extrémité arrière du tronçon avant 4 de l'arbre de direction.

L'extrémité arrière 28 de la cloche 20 forme un manchon denté intérieurement. La cloche 20 est centrée sur l'axe X-X et montée à rotation, par exemple par un roulement à billes 30, sur l'extrémité avant 32 du noyau, central 18 du corps fixe 16, cette extrémité avant 32 étant reçue à l'intérieur du manchon denté 28 de la cloche 20.

Le tronçon arrière 6 de l'arbre de direction est un manchon entourant l'extrémité arrière 34 du noyau 18 du corps fixe 16 et reçu dans l'extrémité arrière de la jupe 17 du corps fixe 16. Deux roulements à billes 35 sont interposés entre la paroi extérieure du tronçon arrière 6 de l'arbre de direction et la paroi intérieure de la jupe 17, pour permettre au tronçon arrière 6 de tourner autour de l'axe X-X par rapport au corps 16 et de bloquer axialement ce tronçon arrière 6 par rapport au corps fixe 16.

L'organe denté arrière 22 est formé par l'extrémité avant du tronçon arrière 6 de l'arbre de direction qui est dentée intérieurement.

Le pignon intermédiaire 24 s'étend de l'avant vers l'arrière depuis l'intérieur du manchon denté avant 28 jusqu'à l'intérieur du manchon denté arrière 22.

Ce pignon 24 est monté sur le noyau 18 par l'intermédiaire d'une tige de support 36 longitudinale disposée à l'intérieur du pignon intermédiaire 24. Deux roulements à aiguilles 38 sont par exemple interposés entre le pignon 24 et la tige 36. La tige 36 et le pignon 24 peuvent se déplacer radialement par rapport au noyau 18.

Les extrémités avant 40 et arrière 42 de la tige 36 font saillie longitudinalement vers l'extérieur du pignon intermédiaire 24. Chacune de ces extrémités présente une première surface de rampe, respectivement 44 et 46. Les deux premières surfaces de rampe 44 et 46 sont inclinées de manière opposée par rapport à l'axe longitudinal X-X, par exemple d'un angle d'environ 20° et plus généralement compris entre 10 et 40°. Ainsi, la première surface de rampe avant 44 est inclinée radialement vers l'extérieur et vers l'avant, et la première surface de rampe arrière 46 est inclinée radialement vers l'extérieur et vers l'arrière.

Les premières surfaces de rampe 44 et 46 prennent appui respectivement sur des deuxièmes surfaces de rampe 48 et 50 inclinées de manière correspondante.

La deuxième surface de rampe avant 48, qui coopère avec la première surface de rampe avant 44 de la tige 36, est ménagée dans l'extrémité avant 32 du noyau 18. La deuxième surface de rampe arrière 50, qui coopère avec la première surface de rampe arrière 46 de la tige 36, est ménagée à l'avant d'un poussoir 52 reçu dans un alésage longitudinal 54 qui est étagé, traversant et ménagé dans l'extrémité arrière 34 du noyau 18 du corps fixe 16.

Le poussoir 52 peut coulisser axialement dans l'alésage 54. Un orifice axial borgne 56 est ménagé à l'arrière du poussoir 52 et reçoit un ressort hélicoïdal de rappel 58 qui prend appui sur le fond de l'orifice 56 et sur une vis 60 vissée dans l'alésage 54 taraudé à l'arrière du poussoir 52. Le ressort 58 rappelle donc le poussoir 52 vers l'avant de l'ensemble de colonne de direction 1.

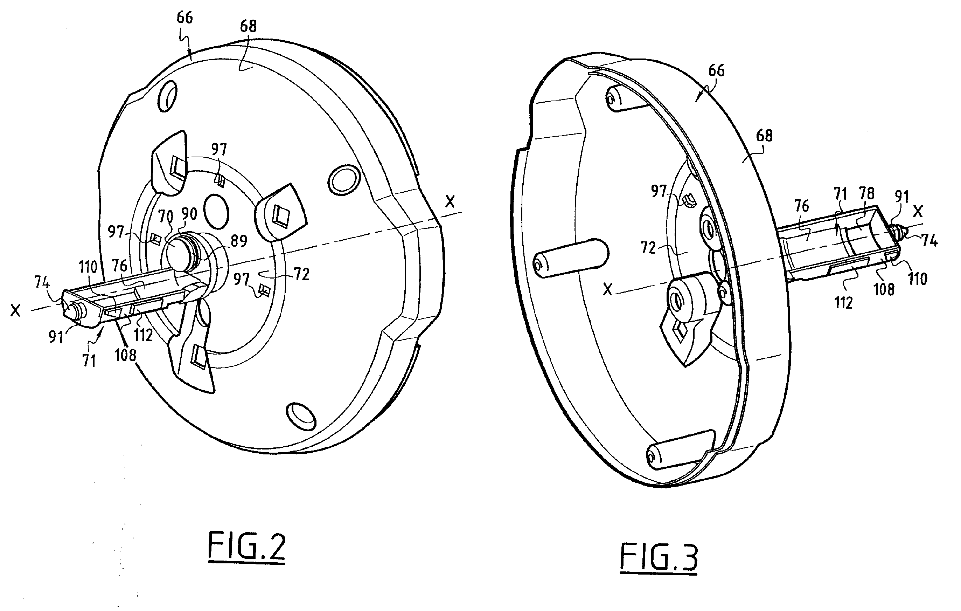

L'ensemble de colonne de direction 1 comprend en outre, au centre du volant 12, un coussin central fixe 64 qui comprend une coquille de support monobloc 66 (figures 1 à 3) réalisée par exemple d'une seule pièce en matière plastique chargée de fibres de verre ou en aluminium ou en magnésium.

Cette coquille 66 comprend une coupelle arrière 68 de forme générale concave, centrée sur l'axe X-X. Cette coquille 66, de concavité dirigée vers l'arrière, définit un logement arrière 69. La coquille 66 est prolongée vers l'avant par un pion cylindrique 70 et une fiche ou queue 71 qui s'étendent parallèlement à l'axe X-X.

Le pion 70 a une longueur nettement plus faible que la fiche 71. La fiche 71 a une section courante en U. Elle est ouverte sur toute sa longueur vers le haut, débouche à l'arrière dans le fond 72 de la coupelle 68 et est fermée à l'avant par une cloison transversale prolongée par une pointe conique de centrage 74. Le pion 70 et la fiche 71 sont excentrés par rapport à l'axe X-X et sont décalés angulairement d'environ 180° autour de cet axe.

Le fond 76 de la fiche 71 présente une ouverture avant 78 sensiblement rectangulaire.

La section transversale de la fiche 71 est fermée par une lame élastique supérieure 80, visible sur la figure 1, et rapportée par encliquetage sur la fiche 71. Ainsi, la lame 80 est fixée rigidement à l'extrémité avant de la fiche 71, son extrémité arrière 81 étant mobile radialement par déformation élastique de la lame 80.

Le coussin central fixe 64 comprend en outre un couvercle arrière 82, par exemple réalisé en plusieurs parties dont une partie centrale 83 et une couronne extérieure comme représenté sur la figure 1. Le coussin central 64 renferme dans le logement 69 un module à sac gonflable de sécurité 84, monté flottant sur le fond 72 de la coupelle 68 par des vis 85 passant dans le fond 72 de la coupelle 68, un commutateur 86 de commande d'avertisseur sonore et éventuellement d'autres accessoires et organes classiques de commande d'équipements du véhicule.

Le pion 70 est reçu, au travers d'un orifice central 87 du moyeu 10, dans le tronçon arrière 88 de l'alésage 54 de l'extrémité arrière 34 du noyau 18 du corps fixe 16. Le pion 70 porte un joint torique 89 engagé également dans le tronçon arrière 88 de l'alésage 54 pour rattraper les jeux. Un circlips 90 est disposé à l'extérieur de l'alésage 54 dans une gorge annulaire ménagée dans le pion 70. Ce circlips 90 est destiné à venir en butée contre le moyeu 10 du volant 12 pour limiter les mouvements vers l'arrière de la. coquille 66 suite au déploiement du sac gonflable de sécurité.

La fiche 71 est reçue, au travers de l'orifice central 87 du moyeu 10, dans un évidement longitudinal de forme correspondante du noyau 18 du corps fixe 16. En particulier, la pointe 74 est reçue dans une cavité de forme correspondante. La pointe 74 porte également un joint torique 91 de rattrapage des jeux.

Le pion 70 et la fiche 71 assurent le centrage radial et le positionnement angulaire relatif du coussin central 64 et du corps fixe 16.

L'extrémité mobile 81 de la lame élastique 80 prend appui sur l'extrémité arrière 34 du noyau 18 du corps fixe 16 en assurant ainsi une limitation des jeux radiaux entre le coussin central fixe 64 et le corps fixe 16. De plus, cette lame 80, du fait de sa largeur, comme vu perpendiculairement au plan de la figure 1, contribue avec le pion 70 et la fiche 71 au centrage et au positionnement angulaire relatif sans jeu du coussin central 64 par rapport au corps fixe 16.

La fiche 71 et la lame 80 définissent intérieurement un passage axial 94 pour un faisceau de conducteurs électriques 96 issus des différents organes de commande du coussin central fixe 64, notamment du commutateur 86 de commande d'avertisseur sonore.

On notera que des pattes de maintien 97 formées par découpage et déformation de la coupelle 68 permettent de plaquer certains de ces conducteurs 96 contre la cuvette 68 dans le logement 69 pour les guider. Le faisceau de conducteurs 96 est terminé à l'avant par un connecteur femelle 98 orienté radialement vers l'extérieur en regard de l'ouverture 78 de la fiche 71. Cette ouverture 78 débouche dans un passage radial 99 ménagé dans le corps 16 entre le noyau 18 et la jupe 17 du corps fixe 16. Un connecteur mâle 100, complémentaire du connecteur femelle 99, est reçu dans ce passage radial 99 pour relier les conducteurs électriques 96 aux équipements correspondants du véhicule.

De manière classique, ce connecteur mâle 100 est verrouillable en position par un levier pivotant 102, qui dans sa position de verrouillage représentée sur la figure 1, est plaqué contre la partie inférieure arrière de la jupe 17 du corps fixe 16.

On notera que sur la figure 1, les connecteurs 98 et 100 et le levier 102 n'ont pas été représentés en coupe.

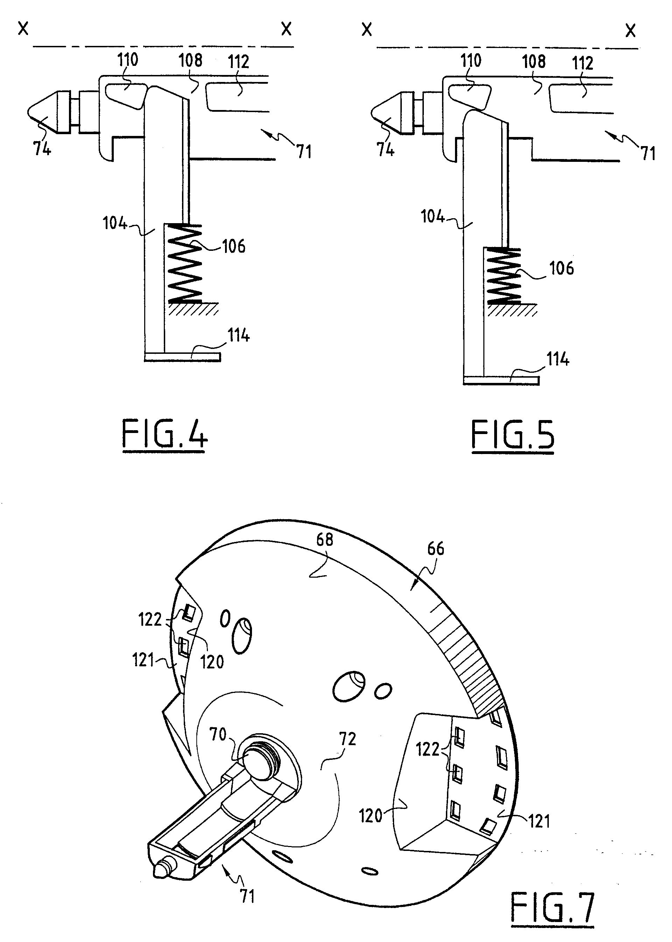

Comme illustré par la figure 4, le corps fixe 16 comprend de chaque côté de la fiche 71 un pêne 104 mobile transversalement et sollicité vers l'intérieur du noyau 18 par un ressort 106. Ces pênes 104 sont engagés chacun dans une gâche 108 ménagée entre un relief avant 110 de blocage formant rampe de dégagement du pêne 104, et un relief arrière 112 de blocage. La fiche 71 présente de tels reliefs 110 et 112 sur ses deux côtés. Les pênes 104 sont prolongés à leur extrémité inférieure par une partie commune de saisie 114 disposée à l'extérieur de la jupe 17 du corps fixe 16, entre cette jupe 17 et le levier 102 du connecteur mâle 100 lorsqu'il est dans sa position de verrouillage. Les pênes 104 engagés dans les gâches 108 permettent d'assurer un verrouillage axial du coussin central fixe 64 par rapport au corps fixe 16.

Ainsi, le coussin central fixe 64 et le corps fixe 16 sont solidaires l'un de l'autre avec un rattrapage des jeux satisfaisant.

Lorsque le conducteur fait pivoter le volant 12 autour de l'axe X-X, ce dernier entraîne par l'intermédiaire du moyeu 10 le tronçon arrière 6 de l'arbre de direction en rotation autour de l'axe longitudinal X-X. Le manchon denté arrière 22 qui engrène avec le pignon intermédiaire 24 entraîne ce dernier en rotation autour de la tige excentrée 36. Le pignon intermédiaire 24 qui engrène également avec le manchon denté avant 28 entraîne alors ce dernier en rotation. Le manchon 28 étant solidaire en rotation du tronçon avant 4 de l'arbre de direction, le mouvement de rotation du volant 12 est transmis par le mécanisme d'engrenages 19 au tronçon avant 4 de l'arbre de direction.

On conçoit que, du fait de sa structure, l'encombrement radial de ce mécanisme d'engrenages 19 et donc de l'ensemble de colonne de direction 1 est relativement réduit.

Les premières surfaces de rampe 44 et 46, les deuxièmes surfaces de rampe 48 et 50 ainsi que le ressort de rappel 58 permettent de rattraper les jeux radiaux entre les dents du pignon intermédiaire 24 et les dents du manchon avant 28 et du manchon arrière 22.

En effet, le ressort 58 exerce une force axiale dirigée vers l'avant sur le poussoir 52. Du fait de l'inclinaison des surfaces de rampe arrière 46 et 50 et des surfaces de rampe avant 44 et 48, cette force longitudinale est transformée en une force radiale de rappel tendant à déplacer le pignon 24 radialement vers l'extérieur et donc à le plaquer contre les manchons dentés avant 28 et arrière 22. Un léger espacement longitudinal entre l'extrémité arrière du poussoir 52 et la vis 60 permet un léger déplacement vers l'arrière du poussoir 52 et donc un léger déplacement radialement vers l'intérieur du pignon 24, contre l'action du ressort 58. Cette caractéristique permet d'absorber les légers défauts de fabrication du pignon intermédiaire 24 et des manchons dentés avant 28 et arrière 22.

La vis 60 permet de régler l'amplitude de cette possibilité de déplacement radial du pignon 24.

L'utilisation de surfaces de rampe 44, 46, 48 et 50, qui transforment une force longitudinale de rappel en une force radiale de rappel, permet de disposer le ressort 58 longitudinalement dans l'ensemble de colonne de direction 1. Cela contribue également à réduire l'encombrement radial de cet ensemble 1, de manière indépendante de la nature du mécanisme à engrenages 19.

Par ailleurs, ces surfaces de rampe 44, 46, 48 et 50 permettent d'utiliser un ressort 58 moins puissant et donc moins encombrant qu'un ressort radial, puisque le ressort axial 58 n'a à compenser que la composante axiale de la force de contact de la tige 36 sur le poussoir 52.

Enfin, de tels mécanismes de maintien des pignons 24 contre les dents des manchons avant 28 et arrière 22 sont moins sensibles au vieillissement que des paliers caoutchoutés sur lesquels la tige 36 serait montée.

De tels moyens de maintien peuvent être utilisés avec d'autres types de mécanisme à engrenages 19.

Par ailleurs, la structure de la coquille 66 permet de réduire les coûts de fabrication et de montage du coussin central fixe 64.

On conçoit en effet qu'une telle coquille 66 qui assure à la fois le positionnement axial et angulaire du coussin central fixe 64 par rapport au corps fixe 16 dans le noyau 18, mais également son verrouillage et le guidage axial des conducteurs électriques 96, est relativement économique.

Par ailleurs, pour venir monter le volant 12 et le coussin fixe 64 sur le reste de l'ensemble de colonne de direction 1, il suffit de procéder par exemple comme suit, le coussin central ayant été préalablement assemblé notamment avec le faisceau de conducteurs 96 et le connecteur femelle 98 disposés dans la fiche 71.

On fait tout d'abord passer le pion 70 et la fiche 71 de la coquille 66 dans l'orifice central 87 du moyeu 10. Ensuite, on vient placer le circlips 90 sur le pion 70.

On vient alors enfoncer ce pion 70 dans le tronçon arrière 88 de l'alésage 54 et la fiche 71 et la pointe 74 dans l'évidement et la cavité correspondante du noyau 18. Au cours de cet enfoncement, les reliefs extérieurs avant 110 de la fiche 71 provoquent le déplacement vers le bas des pênes 104 par effet de rampe comme illustré par la figure 5. Au cours de ce déplacement vers le bas des pênes 104, les ressorts 106 sont comprimés.

Lorsque le déplacement vers l'avant de la fiche 71 se poursuit, les pênes 104 sont ensuite rappelés dans les gâches 108 par les ressorts 106 si bien que le corps fixe 16 et le coussin central 64 sont verrouillés axialement. Le positionnement radial et angulaire relatif du corps fixe 16 et du coussin central 64 est obtenu automatiquement grâce au pion 70 et à la fiche 71.

Ensuite, on vient fixer radialement le moyeu 10 sur l'extrémité arrière du tronçon arrière 6 de l'arbre de direction.

Ainsi, le montage du coussin central fixe 64 est relativement simple notamment grâce au verrouillage par encliquetage de la fiche 71 dans le corps fixe 16.

Ensuite, on vient introduire le connecteur mâle 100 dans le passage radial 98 pour le connecter au connecteur femelle 98, puis on le verrouille en position grâce au levier 102.

Pour démonter le coussin central fixe 64, il est nécessaire de déverrouiller le connecteur mâle 100 pour pouvoir accéder à la partie de saisie 114. Le connecteur 100 ayant été retiré, on tire alors cette partie de saisie 114 vers le bas et ce qui provoque le retrait des pênes 104 des gâches 108 contre l'action des ressorts 106.

Il est alors possible de retirer axialement le coussin central fixe 64 et le volant 12 du reste de l'ensemble de colonne de direction 1.

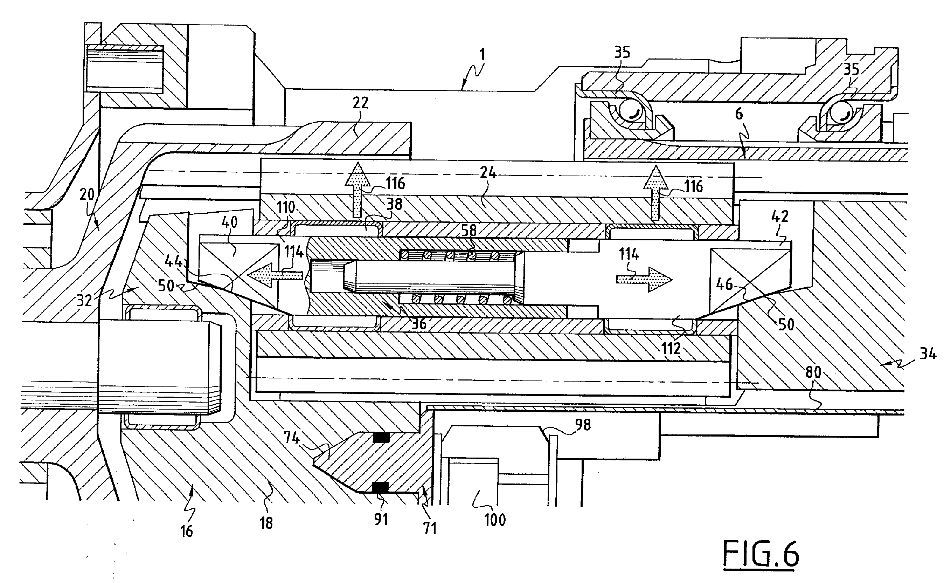

Selon la variante de la figure 6, les deuxièmes surfaces de rampe 48 et 50 sont fixes et ménagées toutes les deux dans le noyau central 18 du corps fixe 16. La tige 36 comprend alors une partie avant 110 et une partie arrière 112 coulissant télécopisquement l'une dans l'autre, le ressort 58 de rappel est alors disposé entre ces deux parties 110 et 112 et prend appui sur celles-ci. Comme illustré par les flèches 114, ce ressort 58 tend à provoquer l'écartement longitudinal des premières surfaces de rampe 44 et 46, ce qui induit des efforts radiaux 116 dirigés vers l'extérieur sur le pignon intermédiaire 24 pour rattraper les jeux.

La figure 6 illustre une variante de la coquille 66 des figures 1 à 4 dans laquelle la coupelle 68 délimite deux logements latéraux 120 de concavités dirigées vers l'avant et vers les côtés. Ces évidements sont destinés à recevoir des organes de commande d'équipements du véhicule automobile. Les parois arrières 121 de ces évidements sont munies d'ouvertures 122 permettant le montage par encliquetage de tels organes de commande, comme des touches par exemple.

## Revendications

1. Ensemble de colonne de direction (1) comprenant un arbre de direction (4, 6), un volant de direction (12) pour entraîner l'arbre de direction en rotation, un bloc (16) fixe lors de la rotation du volant de direction, et un coussin central fixe (64) comprenant lui-même une coquille de support (66) montée sur le bloc fixe (16), la coquille comprenant une coupelle (68) de réception d'accessoires et des moyens (110, 112) d'encliquetage de la coquille (66) dans le bloc fixe (16), le bloc fixe comprenant des moyens (104) complémentaires mobiles d'encliquetage qui coopèrent avec les moyens d'encliquetage de la coquille pour la fixer sur le bloc fixe, caractérisé en ce que les moyens d'encliquetage de la coquille comprennent des reliefs (110) pour provoquer, lors du déplacement de la coquille par rapport au bloc fixe le long d'une direction d'encliquetage (X-X) pour la monter sur le bloc fixe, le déplacement des moyens complémentaires d'encliquetage dans un sens de dégagement des moyens complémentaires d'encliquetage (104) des moyens d'encliquetage (110, 112) de la coquille.

2. Ensemble selon la revendication 1, caractérisé en ce que la direction d'encliquetage est parallèle à un axe central de la coquille (66) et à l'axe (X-X) de rotation du volant de direction (12).

3. Ensemble selon la revendication 1 ou 2, caractérisé en ce que la coquille (66) comprend au moins un organe mâle d'enfichage (70, 71) dans le bloc fixe (16) pour centrer et positionner angulairement la coquille par rapport à ce dernier, l'organe mâle (70, 71) s'étendant longitudinalement parallèlement à l'axe central (X-X) de la coquille.

4. Ensemble selon la revendication 3, caractérisé en ce que l'organe mâle (71) est terminé par une pointe (74) de positionnement.

5. Ensemble selon la revendication 3 ou 4, caractérisé en ce que les moyens d'encliquetage de la coquille (66) comprennent des reliefs d'encliquetage (110, 112) portés par l'organe mâle (71).

6. Ensemble selon l'une quelconque des revendications 3 à 5, caractérisé en ce que l'organe mâle (71) délimite intérieurement un passage longitudinal (94) de réception de moyens (96) de raccordement électrique, lequel passage (94) débouche dans la coupelle (68).

7. Ensemble selon l'une quelconque des revendications 3 à 6, caractérisé en ce que la coquille comprend au moins deux organes mâles (70, 71) d'enfichage dans le bloc fixe (16) pour centrer et positionner angulairement la coquille par rapport à ce dernier, ces organes mâles s'étendant longitudinalement parallèlement à l'axe central (X-X) de la coquille (66).

8. Ensemble selon la revendication 7, caractérisé en ce que les deux organes mâles d'enfichage (70, 71) sont excentrés par rapport à l'axe central (X-X) de la coquille.

9. Ensemble selon l'une quelconque des revendications 1 à 8, caractérisé en ce que la coquille est formée d'une seule pièce.
